# EUROPÄISCHE PATENTANMELDUNG

(11) **EP 1 275 295 A2**
(43) Veröffentlichungstag der Anmeldung: **15.01.2003**
(21) Anmeldenummer: 02014041.4
(22) Anmeldetag: 28.06.2002
(51) Int. Cl.: A01J 5/007, A01J 5/013, A01J 5/017, A01J 7/02, A01J 7/04

(54) **Verfahren und Vorrichtung zum automatischen Melken eines Tieres, insbesondere einer Kuh**

(30) Priorität: 13.07.2001 DE 10134078
(71) Anmelder: Westfalia Landtechnik GmbH, 59302 Oelde (DE)
(72) Erfinder: Osthues, Uwe, 58708 Menden (DE)
(74) Vertreter: Neumann, Ditmar

(57) **Zusammenfassung**

Der Gegenstand der Erfindung bezieht sich auf ein Verfahren sowie auf eine Vorrichtung zum automatischen Melken eines Tieres, insbesondere einer Kuh. Es wird vorgeschlagen, dass die Melkbecher zuerst an die Zitzen des Tieres angesetzt werden. Es werden lediglich die ersten Milchstrahlen für ein Vorgemelk ermolken. Danach werden die Melkbecher abgenommen und wenigstens die Zitzen gereinigt. Nach erfolgter Reinigung werden die Melkbecher erneut angesetzt und der Melkvorgang fortgesetzt.

## Beschreibung

Der Gegenstand der Erfindung bezieht sich auf ein Verfahren sowie auf eine Vorrichtung zum maschinellen Melken eines Tieres, insbesondere einer Kuh.

Verfahren zum maschinellen Melken eines Tieres sowie Vorrichtungen zum maschinellen Melken von Tieren sind an und für sich bekannt. Durch die EP 0300115 B1 ist ein Verfahren bekannt, nach dem die Zitzen des Tieres geortet und die Melkbecher an die Zitzen des Tieres angebracht werden. Die Anbringung der Melkbecher erfolgt sequenziell durch einen Melkroboter. Der Melkroboter weist hierzu einen Tragarm auf, der nacheinander Melkbecher aus einer Haltevorrichtung entnimmt und diese nach dem Auffinden der betreffenden Zitze anbringt.

Sind die Melkbecher an den Zitzen angebracht, so wird der Melkvorgang durchgeführt. Nach Beendigung des Melkvorgangs wird eine Abnahmeautomatik durch eine Steuereinheit angesteuert. Diese Abnahmeautomatik zieht daraufhin über ein flexibles Verbindungselement die Melkbecher von der gemolkenen Zitze ab. Das flexible Verbindungselement stellt sicher, dass die Melkbecher wieder in eine für sie vorgesehen Halterung gelangen. Die Melkbecher werden anschließend einem Spülvorgang unterzogen.

Der in der EP 0300115 B1 beschriebene Melkroboter dient dazu, bei mehreren Melkständen die Melkbecher an die Zitzen eines sich in einem Melkstand befindenden Tieres anzubringen. Hierzu sind die Melkstände hintereinander angeordnet, so dass der Melkroboter entlang einer sich in Längsrichtung der Melkstände erstreckenden Führung geführt wird.

Der vorliegenden Erfindung liegt die Zielsetzung zugrunde, das bekannte Verfahren sowie die bekannte Vorrichtung so weiter zu entwickeln, dass diese eine noch höhere Effizienz aufweisen.

Diese Zielsetzung wird nach dem Gegenstand der Erfindung durch ein Verfahren mit den Merkmalen des Anspruchs 1 bzw. durch eine Vorrichtung mit den Merkmalen des Anspruchs 20 erreicht.

Vorteilhafte Weiterbildungen und Ausgestaltungen des Verfahrens bzw. der erfindungsgemäßen Vorrichtung sind Gegenstand der jeweiligen abhängigen Patentansprüche.

Das erfindungsgemäße Verfahren zum maschinellen Melken eines Tieres, insbesondere einer Kuh, zeichnet sich dadurch aus, dass zunächst die Melkbecher an die Zitzen des Tieres angesetzt werden. Es wird ein Vorgemelk ermolken. Danach erfolgt eine Abnahme der Melkbecher, wobei sich daran ein Reinigungsvorgang anschließt, durch den wenigstens die Zitzen gereinigt werden. Es kann auch eine Reinigung des Euters im Zitzenbereich erfolgen. Nach dem durchgeführten Reinigungsvorgang werden die Melkbecher erneut angesetzt. Der Melkvorgang als solcher wird fortgesetzt.

Durch diese erfindungsgemäße Verfahrensführung wird das Melken eines Tieres effizienter gestaltet. Dadurch, dass eine Reinigung wenigstens der Zitzen erst nach dem ein Vorgemelk gemolken wurde, durchgeführt wird, wird verhindert, dass Keime aus der Zitzenszisterne in die Euterzisterne gedrückt werden, was zu einer Eutergesundheitsbeeinträchtigung führen kann.

Vorzugsweise werden lediglich die ersten Milchstrahlen für das Vorgemelk ermolken. Dies hat den Vorteil, dass keine Alveolarmilch ermolken wird.

Nach noch einer weiteren vorteilhaften Weiterbildung des Verfahrens wird vorgeschlagen, dass das Vorgemelk einer Analyse unterzogen und in Abhängigkeit vom Ergebnis der Analyse die Milch entweder verwertet oder verworfen wird.

Dadurch, dass der Reinigungsvorgang wenigstens der Zitzen erst dann erfolgt, nachdem das Vorgemelk ermolken wurde, welches analysiert wird, wird sichergestellt, dass das Vorgemelk keine Fremdstoffe wie z.B. Wasser oder Reinigungsmittel enthält. Diese Fremdstoffe können das Analyseergebnis verfälschen. Durch die Analyse des Vorgemelks wird auch eine Eutergesundheitsüberwachung erreicht. Da die ersten Milchstrahlen den höchsten Keimgehalt haben, und die Reinigung der Zitzen nach dem Abmelken des Vorgemelks erfolgt, wird auch eine höhere Analysegenauigkeit erzielt, da Keime nicht in die Euterzisterne gedrückt werden.

Um sicherzustellen, dass eine Kontamination der Milch dadurch erfolgt, dass Keime aus dem Vorgemelk, die im Melkbecher verbleiben können in die Milch gelangen, wird nach einer noch weiteren vorteilhaften Weiterbildung des Verfahrens vorgeschlagen, dass vor einem erneuten Ansetzen der Melkbecher, wenigstens diese einem Reinigungsvorgang unterzogen werden. Zusätzlich zu den Melkbechern können auch die Teile des Melksystems gereinigt werden, die mit dem Vorgemelk Kontakt hatten.

Zur Reinigung wenigstens der Melkbecher wird vorgeschlagen, dass mindestens die Melkbecher mit einer Flüssigkeit durchgespült werden. Bei dieser Flüssigkeit kann es sich um Wasser oder um eine Reinigungs-/Desinfektionslösung handeln. Die Reinigungs-/Desinfektionslösung kann auch Wasser enthalten. Sofern die Melkbecher mit einer Reinigungs-/Desinfektionslösung durchgespült worden sind, sollte sichergestellt werden, dass die Reinigungs-/Desinfektionslösung im wesentlichen rückstandsfrei entfernt wird. Dies kann dadurch erfolgen, dass auf einen Spülvorgang mit einer Reinigungs-/Desinfektionslösung wenigstens ein Spülvorgang mit Wasser erfolgt.

In Abkehr von dem durch die EP 0300115 B1 bekannten Verfahren zum automatischen Melken eines Tieres, wonach die Melkbecher aufeinanderfolgend mittels eines Melkroboters an den Zitzen angebracht werden, wird erfindungsgemäß vorgeschlagen, dass die Melkbecher unabhängig voneinander und im wesentlichen gleichzeitig an die Zitzen des Tieres angebracht werden. Dadurch, dass die Melkbecher im wesentlichen gleichzeitig angesetzt werden, kann die Ansetzzeit deutlich reduziert werden. Ein weiterer Vorteil dieser Verfahrensführung ist darin zu sehen, dass die aufgewendete Ansetzzeit je Zitze gegenüber bekannten Melksystem erhöht werden kann. Dies bedeutet im Verbindung mit einer Verringerung der Ansetzversuche eine höhere Ansetzqualität. Diese Vorteile der Verfahrensführung sind unabhängig davon, ob nach dem Ansetzvorgang ein kontinuierlicher Melkvorgang durchgeführt wird oder ob nach einem ersten Ansetzvorgang der Gewinnung eines Vorgemelks ein Reinigungsvorgang mit sich anschließenden zweiten Ansetzvorgang durchgeführt wird. Diese Verfahrensführung ist für das erfindungsgemäße Verfahren jedoch von großem Vorteil, da nach dem erfindungsgemäßen Verfahren zwei Ansetzvorgänge durchgeführt werden müssen.

Zur Ortung der Zitzen ist es vorteilhaft, wenn die Eutergeometrie und die Position der Zitzen relativ zueinander in Bezug auf die Eutergeometrie gespeichert werden, so dass das Auffinden der Zitzen durch die aktuellen Daten des Tieres beim zweiten Ansetzvorgang noch weiter erleichtert wird.

Um die Verweilzeit eines Tieres, insbesondere einer Kuh im Melkstand noch weiter zu reduzieren, wird vorgeschlagen, dass jeder Melkbecher eine Ansetzeinheit aufweist, wobei eine jede Ansetzeinheit auch während des Melkvorgangs mit dem Melkbecher verbunden bleibt. Eine jede Ansetzeinheit ist vorzugsweise mit einer separaten Steuereinheit verbunden, die die Ansetzeinheit steuert. Hierdurch wird auch die Anzahl der Ansetzvorgänge bzw. Ansetzversuche verringert.

Nach einer noch weiteren vorteilhaften Ausgestaltung des Verfahrens wird vorgeschlagen, dass wenigstens eine Ansetzeinheit während eines Nachmelkvorgangs auf den Melkbecher eine im wesentlichen vertikal nach unten gerichtete Kraft ausübt. Durch diese Maßnahme wird erreicht, dass das Eutergewebe gestrafft wird. Dies führt zu einer erhöhten Eutergesundheit, da während eines Melkvorgangs sich das Eutergewebe zwischen Drüsen- und Zitzenzisterne unter Einwirkung des Melkdrucks zunehmend zusammenzieht. Aufgrund des erhöhten Vakuums im Inneren des Zitzengummis eines Melkbechers und hinsichtlich des versiegenden Milchstromes gegen Ende des Melkvorgangs kann eine Flüssigkeitsansammlung im Bereich des Fürstenbergschen Venenrings hervorgerufen werden. Diese Flüssigkeitsansammlung kann zu Ödembildung führen, durch die es in der Regel zu einem dauerhaften Verschluß der milchleitenden Kanäle in den Zitzen kommen kann. Dieser Effekt wird noch weiter verstärkt durch den Beschleunigungsdruck und Fließdruck der Milchsäule. Dies führt in der Regel dazu, dass der Melkbecher an der Zitze nach oben zu klettern beginnt und ein frühzeitiges Einleiten einer Ausmelkphase erfolgt und hierdurch der Melkvorgang schneller als gewünscht beendet wird. Dadurch, dass durch wenigstens eine Ansetzeinheit während eines Nachmelkvorgangs auf den Melkbecher eine im wesentlichen vertikal nach unten gerichtete Kraft ausgeübt wird, werden diese Nachteile vermieden. Insbesondere wird verhindert, dass der Melkbecher nach oben klettert. Klettern kann zu einer Reizung des Fürstenbergschen Venenrings führen, die zu einer Melkunwilligkeit des Tieres führen kann. Die Größe der Kraft, die über den Melkbecher auf die Zitze übertragen wird, ist vorzugsweise zitzen- oder viertelindividuell eingestellt.

Gemäß einer noch weiteren vorteilhaften Ausgestaltung des Verfahren wird vorgeschlagen, dass die Größe der Kraft tierindividuell eingestellt ist. Hierdurch kann erreicht werden, dass für ein jedes Tier Kräfte, die auf die Zitzen über die Melkbecher ausgeübt werden sollen, an ein jedes Tier angepasst sind.

Gemäß einer noch weiteren vorteilhaften Ausgestaltung des Verfahrens wird vorgeschlagen, dass die Kraft während des Nachmelkvorgangs im wesentlichen konstant gehalten wird.

Nach einer noch weiteren vorteilhaften Ausgestaltung des Verfahrens wird vorgeschlagen, dass die Kraft während des Nachmelkvorgangs verändert wird. Dabei kann die Kraft zunehmen oder abnehmen. Die Veränderung der Kraft während des Nachmelkvorgangs erfolgt vorzugsweise kontinuierlich, so dass eine Irritation des Tieres vermieden wird.

Statt einer kontinuierlichen Veränderung der Kraft kann auch eine diskontinuierliche Änderung der Kraft zweckmäßig sein. Dies ist insbesondere vom Verlauf der Milchflusskurve abhängig.

Die Einleitung einer Kraft und der Kraftverlauf kann von der Euterform des Tieres sowie von den Eigenschaften des Euters abhängig sein. Bei Tieren, die eine losere Euteraußenhaut haben, wird durch die Einleitung der Kraft der Ausmelkvorgang gegenüber den herkömmlichen Melkverfahren verkürzt. Die Verkürzung führt zu einer kürzen Maschinenhaftzeit, die eine positiven Einfluß auf die Zitzenkondition und die Eutergesundheit hat.

Gemäß einer noch weiteren vorteilhaften Weiterbildung des Verfahrens wird vorgeschlagen, dass ein Nachmelkvorgang in Abhängigkeit vom Milchfluß eingeleitet wird. Insbesondere wird vorgeschlagen, dass beim Melken einer Kuh, der Nachmelkvorgang dann eingeleitet wird, wenn der Milchfluß unter einen einstellbaren Wert, vorzugsweise unter 800 ml/min fällt. Hierbei wird während des Melkvorgangs eine kontinuierliche bzw. eine diskontinuierliche Überprüfung des Milchflusses durchgeführt. Insbesondere wird nach einer noch weiteren vorteilhaften Weiterbildung des Verfahrens vorgeschlagen, dass der Nachmelkvorgang viertelindividuell eingeleitet wird. Hierdurch wird die Endphase des Melkens nochmals reduziert. Dies geht einher mit einer verkürzten Gesamtmelkzeit, ohne dass es zu einer Beeinträchtigung der Eutergesundheit kommt. Der Nachmelkvorgang kann auch tierindividuell eingeleitet werden.

Gemäß einem weiteren erfinderischen Gedanken wird eine Vorrichtung zum automatischen Melken eines Tieres, insbesondere einer Kuh vorgeschlagen. Die Vorrichtung weist wenigstens einen Melkstand und eine Reinigungseinrichtung auf. Zur Anbringung der Melkbecher an die Zitzen des Tieres ist eine Ansetzeinrichtung vorgesehen. Die Vorrichtung weist des weiteren eine Steuereinrichtung auf. Bei der erfindungsgemäßen Vorrichtung ist die Steuereinrichtung mit der Ansetzeinrichtung und der Reinigungseinrichtung verbunden. Sie steuert sowohl die Ansetzeinrichtung als auch die Reinigungseinrichtung derart, dass die Melkbecher an die Zitzen des Tieres angesetzt werden und ein Vorgemelk ermolken wird. Danach werden die Melkbecher von den Zitzen abgenommen. Durch diese erfindungsgemäße Vorrichtung wird eine höhere Effektivität des Melkens erreicht.

Die erfindungsgemäße Vorrichtung zeichnet sich nach einer vorteilhaften Weiterbildung dadurch aus, dass eine Analyseeinrichtung vorgesehen ist, durch die die ersten ermolkenen Milchstrahlen eines Vorgemelks analysiert werden und in Abhängigkeit vom Ergebnis der Analyse die Milch entweder in eine Leitung für verwertbare Milch oder in eine Leitung für nicht-verwertbare Milch geleitet wird.

Durch diese vorteilhafte Weiterbildung der Vorrichtung wird sichergestellt, dass keine kontaminierte Milch in eine Leitung für verwertbare Milch gelangt. Bei der Kontamination kann es sich um eine Kontamination der Milch mit Keimen handeln.

Um sicherzustellen, dass bei dem nachfolgenden Melkvorgang die Milch nicht durch Keime des Vorgemelks, durch Schmutzpartikel oder dergleichen kontaminiert wird, wird nach einer noch weiteren vorteilhaften Weiterbildung der Vorrichtung vorgeschlagen, dass eine Melkzeug-Reinigungseinheit vorgesehen ist, die mit der Steuereinheit verbunden ist, wobei das Melkzeug vor einem erneuten Ansetzen der Melkbecher wenigstens einem Reinigungsvorgang unterzogen wird.

Zur Verringerung der Verweildauer eines Tieres in einem Melkstand und zur Erhöhung der Ansetzsicherheit wird nach einer noch weiteren vorteilhaften Ausbildung der Vorrichtung vorgeschlagen, dass die Einsetzeinrichtung für einen jeden Melkbecher eine Ansetzeinheit aufweist, wobei eine jede Ansetzeinheit auch während des Melkvorgangs mit dem Melkbecher verbunden bleibt.

Der Melkstand ist vorzugsweise so ausgebildet, dass ein Tier im Melkstand eine gewisse Bewegungsfreiheit hat. Dies kann dazu führen, dass das Tier sich innerhalb des Melkstandes bewegt. Um zu vermeiden, dass die Melkbecher durch die Bewegung eines Tieres von den Zitzen gezogen werden oder es zu einem Knicken der Zitzen kommen kann, wird nach weiteren vorteilhaften Ausbildungen der Vorrichtung vorgeschlagen, dass jede Ansetzeinheit und/oder die Ansetzeinrichtung "schwimmend" gelagert ist. Durch diese Lagerung wird eine Bewegung der Ansetzeinheit bzw. der Ansetzeinrichtung ermöglicht, so dass auch bei einer Bewegung des Tieres im Melkstand die Melkbecher ihre vorgegebene Position nicht verändern und an den Zitzen haften bleiben, ohne unerwünschte Kräfte oder Momente auf die Zitze auszuüben.

Diese Haftsicherheit wird noch weiter erhöht, wenn eine Ansetzeinheit wenigstens einen teleskopartig ausgebildeten Tragarm aufweist, der an einem freien Ende einen Melkbecher trägt. Der teleskopartig ausgebildete Tragarm kann der Veränderung der Position der Zitzen folgen.

Gemäß einer noch weiteren vorteilhaften Ausbildung der Vorrichtung wird vorgeschlagen, dass die Ansetzeinrichtung und/oder die Einsetzeinheit während eines Nachmelkvorgangs auf die oder den Melkbecher eine im wesentlichen vertikal nach unten gerichtete Kraft ausübt. Hierdurch wird die Ausmelkzeit eines Tieres verringert. Des weiteren wird vermieden, dass die Melkbecher an der Zitze hoch klettern.

Bevorzugt ist eine Ausbildung der Vorrichtung, die eine Ansetzeinrichtung hat, die sich im wesentlichen in Längsrichtung des Melkstandes bewegt.

Nach noch einer weiteren vorteilhaften Ausbildung der Vorrichtung wird vorgeschlagen, dass wenigstens die Ansetzeinrichtung in einem Gehäuse angeordnet ist, das teilweise einen Bodenabschnitt des Melkstands bildet. Diese Ausgestaltung ermöglicht eine platzsparende Ausbildung der Vorrichtung.

Vorzugsweise bildet das Vordergehäuse eine Trittstufe innerhalb des Melkstandes. Das Tier gelangt mit den Läufen auf die Trittstufe, so dass das Euter des Tieres für den Ansetzvorgang der Melkbecher freier zugänglich ist. Die Ansetzqualität wird dadurch verbessert. Vorzugsweise ist die Trittstufe im Melkstand dort ausgebildet, wo das Tier mit seinen Vorderläufen steht, so dass auch ein Verletzungsrisiko für die Hinterläufe bzw. ein Wegschieben derselben durch Heranfahren der Technik verringert wird.

Nach einer noch weiteren bevorzugten Ausbildung der erfindungsgemäßen Vorrichtung wird vorgeschlagen, dass das Gehäuse in einer vertikalen Richtung bewegbar ist. Hierdurch kann die Höhe der Trittstufe variiert werden. Ein weiterer Vorteil dieser Ausgestaltung ist, dass das Gehäuse mit dem Boden eben abschließen kann, wenn ein Tier den Melkstand betritt. Hat das Tier eine vorgegebene Position eingenommen, und steht es mit den Läufen auf dem Bodenabschnitt, der durch das Gehäuse gebildet ist, so kann das Gehäuse vertikal nach oben verfahren werden, wodurch das Tier die gewünschte Position einnimmt, ohne dass es eine Trittstufe betreten muss. Sind die Melkbecher wenigstens nach der Reinigung der Zitzen erneut angesetzt worden, so kann ab diesem Zeitpunkt das Gehäuse vertikal nach unten verfahren werden, bis es die Ausgangsstellung einnimmt.

Nach einer noch weiteren vorteilhaften Ausbildung der Vorrichtung wird vorgeschlagen, dass diese eine Mehrzahl von Melkständen aufweist, die nebeneinander und vorzugsweise im wesentlichen parallel zueinander angeordnet sind. Diese Anordnung ermöglicht einen kompakten Aufbau der Vorrichtung. Die Melkstände können auch im wesentlichen sternförmig angeordnet sein.

Bevorzugt ist eine Ausbildung der Vorrichtung, bei der wenigstens zwei benachbarte Melkstände eine gemeinsame sich in Längsrichtung der Melkstände erstreckende Trennwand aufweisen.

Nach einer noch weiteren bevorzugten Ausgestaltung der Vorrichtung wird vorgeschlagen, dass die Melkstände paarweise angeordnet sind, wobei zwischen zwei benachbarten Melkstandpaaren wenigstens ein Zwischenraum vorgesehen ist. Bei diesem Zwischenraum kann es sich beispielsweise um einen Servicegang handeln. In dem Zwischenraum kann weiteres Equipment vorgesehen sein.

Gemäß einer noch weiteren bevorzugten Ausgestaltung der Vorrichtung wird vorgeschlagen, dass ein Wartebereich vorgesehen ist, in dem die Tiere warten, bevor sie einen Melkstand betreten. Diese Konzeption der Vorrichtung ist besonders für Großherden geeignet, die mit festen Melkzeiten arbeiten. Durch den Wartebereich werden die Melkabläufe positiv beeinflusst.

Weitere Vorteile und Einzelheiten der Erfindung werden anhand der in Zeichnung dargestellten Ausführungsbeispiele erläutert, ohne dass die Erfindung auf diese Ausführungsbeispiele beschränkt wird.

Es zeigen:
- Fig. 1: Schematisch und in einer perspektivischen Darstellung einen Melkstand,
- Fig. 2: den Melkstand nach Fig. 1 in einer Draufsicht,
- Fig. 3: den Melkstand nach Fig. 1 in einer Vorderansicht,
- Fig. 4: schematisch einen Melkstand mit einem Tier in einer Seitenansicht,
- Fig. 5: den Melkstand nach Fig. 4 in einer Draufsicht und
- Fig. 6: eine Vorrichtung mit mehreren Melkständen nach Fig. 1.

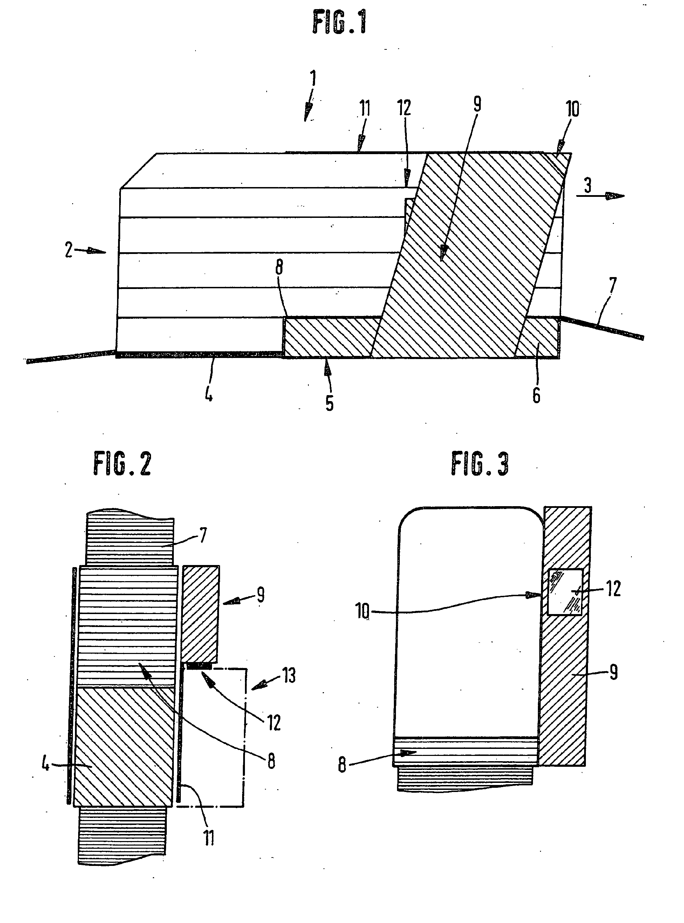

Fig. 1 zeigt einen Melkstand 1 einer Vorrichtung zum automatischen Melken eines Tieres, insbesondere einer Kuh. Der Melkstand 1 weist einen Eingang 2 und einen Ausgang 3 auf. Der Eingang 2 und der Ausgang 3 sind gegenüberliegend angeordnet, so dass ein Tier den Melkstand 1 durch den Eingang 2 betritt und in Längsrichtung des Standes durch den Ausgang 3 verläßt.

Der Melkstand 1 weist einen Boden 4 auf. Im Bereich des Ausgangs 3 ist ein Gehäuse 6 angeordnet, welches einen Bodenabschnitt 5 bildet. Das Gehäuse 6 ist gegenüber dem Boden 4 erhöht, so dass das Gehäuse 6 eine Trittstufe 8 bildet. Im Ausgangsbereich und hinter dem Melkstand ist eine Rampe 7 ausgebildet, welche sich an der Oberkante des Gehäuses 6 in Längsrichtung des Melkstandes 1 und von diesem weg erstreckt.

Betritt ein Tier den Melkstand 1, so gelangen die Vorderläufe des Tieres auf das Gehäuse 6, welches eine Trittstufe 8 bildet. Durch diese Haltung des Tieres wird das Euter des Tieres freigegeben, so dass ein Ansetzen von Melkbechern sowie eine Reinigung des Euters erleichtert wird. Die Reinigungseinrichtung zur Reinigung des Euters sowie die Ansetzeinrichtung für die Melkbecher sowie die Melkbecher sind innerhalb des Gehäuses 6 angeordnet.

Fig. 1 zeigt des weiteren ein schrankartig ausgebildetes Gehäuse 9, in dem zumindest die zur Steuerung der Ansetzeinrichtung sowie der Reinigungseinrichtung notwendigen Steuerelemente und Bauteile angeordnet sind. An einer Wand des Gehäuses 9 ist eine Eingabeeinheit 12 vorgesehen, die dem Bedienpersonal die Möglichkeit eröffnet, Werte einzugeben. Die Eingabeeinheit 12 kann auch eine Ausgabeeinheit von Daten umfassen. Das Gehäuse 9 weist eine Schiebetür 10 auf, welche in Längsrichtung des Melkstandes 1 verschieblich gehaltert ist. Hierzu ist eine Führung 11 vorgesehen.

Fig. 2 zeigt, dass unterhalb und gegebenenfalls neben dem Melkstand 1 eine Grube oder Tunnel 13 ausgebildet ist, in dem Versorgungsleitungen geführt sind. Die Grube kann zur Aufnahme und zum Abtransport von Ausscheidungen des Tieres dienen.

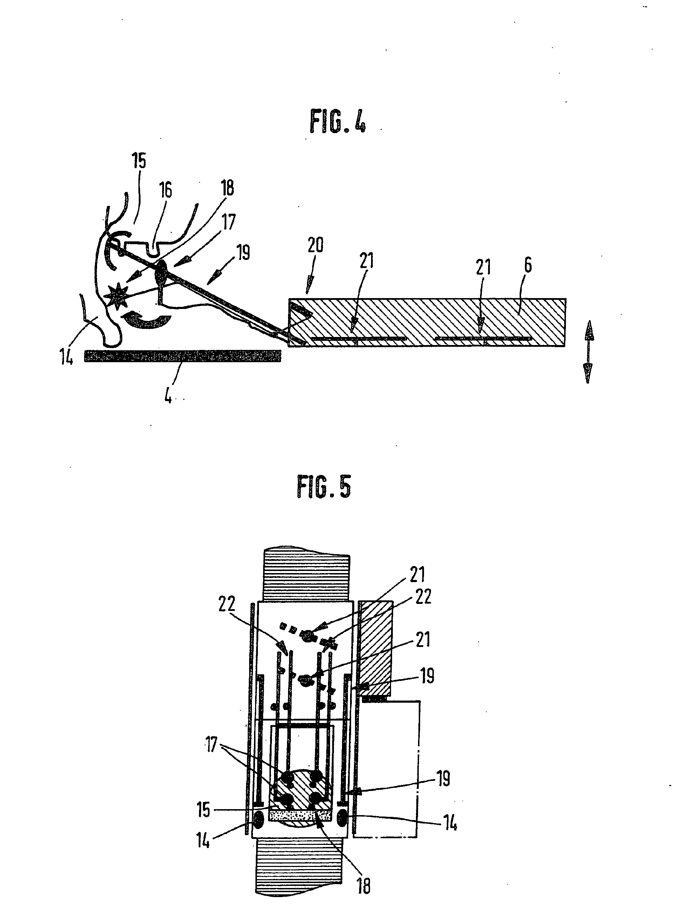

Das Gehäuse 6, welches die Trittstufe 8 bildet, kann ortsfest angeordnet sein. Bevorzugt ist eine Ausgestaltung, bei der das Gehäuse 6 in einer vertikalen Richtung bewegbar ist. Dies wird durch den Pfeil in der Fig. 4 angedeutet. Innerhalb des Gehäuses 6 ist eine Reinigungseinheit vorgesehen, die zur Reinigung der in dem Gehäuse 6 angeordneten Komponenten vorgesehen ist. Innerhalb des Gehäuses 6 ist auch eine Ansetzeinrichtung 20 zum Ansetzen der Melkbecher 17 angeordnet. Des weiteren ist in dem Gehäuse 6 eine Reinigungseinrichtung 18 für ein Euter 15 eines Tieres angeordnet.

Um zu vermeiden, dass sich ein Tier an den Hinterläufen 14 verletzt, ist ein Trittschutz 19 vorgesehen. Der Trittschutz 19 ist in Längsrichtung des Melkstandes beweglich.

Ist ein Tier, insbesondere eine Kuh identifiziert worden und durch die Identifikation festgestellt worden, dass das Tier melkreif ist, wird der Eingang 2 des Melkstandes freigegeben, so dass das Tier in den Melkstand gelangen kann. Hierbei nimmt das Tier eine vorgegebene Position ein. Vor dem Beginn des automatischen Melkvorgangs wird der Trittschutz 19, welcher in einer Ausgangsstellung in dem Gehäuse 6 ist, aus dem Gehäuse 6 herausgefahren und nimmt die in der Fig. 4 bzw. 5 dargestellte Stellung ein. Der Ansetzvorgang wird durch eine nicht dargestellte Steuerung ausgelöst. Mittels der Ansetzeinrichtung 20 werden die Melkbecher 17 an die Zitzen 16 des Tieres angebracht. Die Ansetzeinrichtung 20 umfaßt Ansetzeinheiten 22. Für jeden Melkbecher 17 ist eine gesonderte Ansetzeinheit 22 vorgesehen. Die Ansetzeinheiten 22 sind unabhängig voneinander bewegbar. Die Ansetzeinheiten 22, die die Melkbecher tragen, die im hinteren Teil des Euters sind, werden zunächst aus dem Gehäuse 6 herausgefahren. Danach werden die Ansetzeinheiten 22 herausgefahren, die die Melkbecher 17 für die vorderen Zitzen tragen. Jede Ansetzeinheit 22 und/oder die Ansetzeinrichtung 20 ist "schwimmend" gelagert, so dass diese eine Bewegung des Tieres innerhalb des Melkstandes 1 folgen können. Die Position des Euters wird während der Zeit, in der die Melkbecher angesetzt sind, bestimmt. Diese Daten werden an eine Steuerung weitergegeben, so dass die Veränderung der Position relativ zu einem Referenzpunkt an die Ansetzeinrichtung weitergegeben werden, die Ansetzeinrichtung der Bewegung des Tieres, des Euters, folgen kann.

Sind die Melkbecher 17 an die Zitzen 16 des Tieres angesetzt worden, so wird ein Vorgemelk, welches lediglich die ersten Milchstrahlen enthält, ermolken. Das Vorgemelk wird einer nicht dargestellten Analyseeinrichtung zugeführt, durch die das Vorgemelk analysiert wird. In Abhängigkeit vom Ergebnis der Analyse wird die Milch entweder in eine Leitung, welche nicht dargestellt ist, für verwertbare Milch oder in eine Leitung für nicht verwertbare Milch geleitet.

Ist das Vorgemelk ermolken worden, so werden die Melkbecher 17 von den Zitzen 16 abgenommen. Es erfolgt ein Reinigungsvorgang. Für diesen Reinigungsvorgang wird die in dem Gehäuse 6 positionierte Reinigungseinrichtung 18 aus dem Gehäuse 6 herausgefahren und eine Reinigung wenigstens der Zitzen durchgeführt. Durch den Reinigungsvorgang können auch Teilbereiche des Euters 15 gereinigt werden, wobei der Reinigungsvorgang auch eine stimulierende Wirkung haben kann.

Während des Reinigungsvorgangs werden wenigstens die Melkbecher 17 mit einer Flüssigkeit durchgespült, um sicherzustellen, dass Keime oder Schmutzstoffe nicht in eine Milchleitung gelangen

Nach erfolgter Reinigung der Zitzen 16 werden die Melkbecher 17 erneut an die Zitzen 16 angesetzt. Die Reinigungseinrichtung 18 kann dabei vor, während oder nach erneuten Ansetzen der Melkbecher 17 die ihr vorgegebene Stellung in dem Gehäuse 6 annehmen.

Während des Nachmelkvorgangs wird durch die Ansetzeinrichtung und/oder eine jede Ansetzeinheit 22 auf die Melkbecher 17 eine im wesentlichen vertikal nach unten gerichtete Kraft ausgeübt. Die Größe der Kraft kann zitzen- oder viertelindividuell eingestellt sein. Bei einer Überlagerung der wirkenden Kräfte durch die Ansetzeinrichtung und eine jede Ansetzeinheit kann durch die Ansetzeinrichtung die Kraft tierindividuell eingestellt sein. Die Kraft als solche kann während des Nachmelkvorgangs verändert werden.

Ist der Melkvorgang beendet, so werden die Melkbecher und die Ansetzeinheiten 22 bzw. über die Ansetzeinrichtung 20 in das Gehäuse 6 verfahren. Hierzu sind geeignete Antriebsmittel, welche nicht dargestellt sind, in dem Gehäuse 6 oder unterhalb des Gehäuses 6 angeordnet. Der Trittschutz 19 gibt das Tier frei, so dass dieses den Melkstand 1 über den Ausgang 3 verlassen kann. Ist das Gehäuse 6 so ausgebildet, dass dieses im wesentlichen in einer vertikalen Richtung beweglich ist, kann dieses nach unten hin verfahren werden, so dass die Deckwand des Gehäuses 6, die den Bodenabschnitt 5 bildet, der mit dem Boden 4 in einer Ebene liegt.

Innerhalb des Gehäuses 6 ist eine Reinigungseinheit 21 vorgesehen, durch die die innerhalb des Gehäuses 6 angeordneten Bauteile gereinigt werden können.

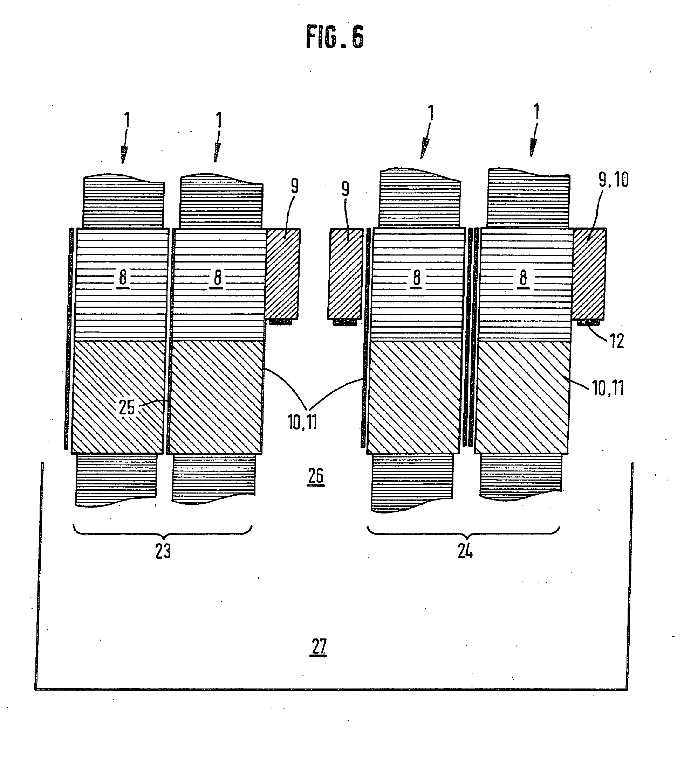

Fig. 6 zeigt schematisch ein weiteres Ausführungsbeispiel einer Vorrichtung zum automatischen Melken eines Tieres, insbesondere einer Kuh. Die Vorrichtung umfasst mehrere Melkstände 1, die vorzugsweise den Aufbau des in der Fig. 1 dargestellten und vorstehend beschriebenen Melkstandes aufweisen. Die Melkstände 1 sind nebeneinander und im wesentlichen parallel zueinander angeordnet.

Aus der Fig. 6 ist ersichtlich, dass die Melkstände 1 paarweise angeordnet sind, wobei zwischen zwei benachbarten Melkstandpaaren 23, 24 ein Zwischenraum 26 vorgesehen ist. Der Zwischenraum 26 kann in Form eines Servicegangs ausgebildet sein. Vor den Eingängen der Melkstände 1 ist ein Wartebereich 27 ausgebildet.

In dem in der Fig. 6 dargestellten Ausführungsbeispiel ist gezeigt, dass das Melkstandpaar 23 ein schrankförmig ausgebildetes Gehäuse 9 aufweist, dem eine Steuerungseinheit für die beiden Melkstände 1 des Melkstandpaares 23 angeordnet ist. Dies führt zu einer noch kompakteren Bauweise der Vorrichtung.

Zwischen zwei benachbarten Eckständen 1 ist eine gemeinsame Trennwand 25 vorgesehen, die sich in Längsrichtung der Melkstände 1 erstreckt.

Die vorstehend in den Fig. 1 bis 6 beschriebene Vorrichtung zeichnet sich durch einen besonders kompakten Aufbau aus.

### Bezugszeichenliste

- 1: Melkstand
- 2: Eingang
- 3: Ausgang
- 4: Boden
- 5: Bodenabschnitt
- 6: Gehäuse
- 7: Rampe
- 8: Trittstufe
- 9: Gehäuse
- 10: Schiebetür
- 11: Führung
- 12: Eingabeeinheit
- 13: Grube
- 14: Hinterlauf
- 15: Euter
- 16: Zitze
- 17: Melkbecher
- 18: Reinigungseinrichtung (Euter)
- 19: Trittschutz
- 20: Ansetzeinrichtung
- 21: Reinigungseinheit (Gehäuse 6)
- 22: Ansetzeinheit
- 23: Melkstandpaar
- 24: Melkstandpaar
- 25: Trennwand
- 26: Zwischenraum
- 27: Wartebereich

## Patentansprüche

1. Verfahren zum automatischen Melken eines Tieres, insbesondere einer Kuh, bei dem
Melkbecher (17) an die Zitzen (16) des Tieres angesetzt werden;
ein Vorgemelk ermolken wird;
die Melkbecher (17) abgenommen werden;
wenigstens die Zitzen (16) gereinigt werden;
die Melkbecher (17) erneut angesetzt werden und der Melkvorgang fortgesetzt wird.

2. Verfahren nach Anspruch 1, bei dem lediglich die ersten Milchstrahlen für das Vorgemelk ermolken werden.

3. Verfahren nach Anspruch 1 oder 2, bei dem das Vorgemelk einer Analyse unterzogen und in Abhängigkeit vom Ergebnis der Analyse die Milch entweder verwertet oder verworfen wird.

4. Verfahren nach Anspruch 1, 2 oder 3, bei dem vor einem erneuten Ansetzen der Melkbecher (17), wenigstens diese einem Reinigungsvorgang unterzogen werden.

5. Verfahren nach Anspruch 4, bei dem die wenigstens die Melkbecher (17) mit einer Flüssigkeit durchgespült werden.

6. Verfahren nach einem der Ansprüche 1 bis 5, bei dem die Melkbecher (17) unabhängig von einander und im wesentlichen gleichzeitig an die Zitzen (16) des Tieres angebracht werden.

7. Verfahren nach Anspruch 6, bei dem jeder Melkbecher (17) eine Ansetzeinheit (22) aufweist, wobei eine jede Ansetzeinheit (22) auch während des Melkvorgangs mit dem Melkbecher (17) verbunden bleibt.

8. Verfahren nach Anspruch 7, bei dem wenigstens eine Ansetzeinheit (22) während eines Nachmelkvorgangs auf den Melkbecher (17) eine im wesentlichen vertikal nach unten gerichtete Kraft ausübt.

9. Verfahren nach Anspruch 8, bei dem die Größe der Kraft viertelindividuell eingestellt ist.

10. Verfahren nach Anspruch 8 oder 9, bei dem die Größe der Kraft tierindividuell eingestellt ist.

11. Verfahren nach Anspruch 8, 9 oder 10, bei dem die Kraft während des Nachmelkvorgangs im wesentlichen konstant gehalten wird.

12. Verfahren nach Anspruch 8, 9 oder 10, bei dem die Kraft während des Nachmelkvorgangs verändert wird.

13. Verfahren nach Anspruch 12, bei dem die Kraft während des Nachmelkvorgangs zunimmt.

14. Verfahren nach Anspruch 13, bei dem die Kraft während des Nachmelkvorgangs kontinuierlich zunimmt.

15. Verfahren nach Anspruch 13, bei dem die Kraft während des Nachmelkvorgangs diskontinuierlich zunimmt.

16. Verfahren nach einem der Ansprüche 1 bis 15, bei dem ein Nachmelkvorgang in Abhängigkeit vom Milchfluss eingeleitet wird.

17. Verfahren nach Anspruch 16 zum Melken einer Kuh, bei dem der Nachmelkvorgang eingeleitet wird, wenn der Milchfluss kleiner als ein vorgegebener Wert, vorzugsweise kleiner 800 ml/min ist.

18. Verfahren nach Anspruch 16 oder 17, bei dem der Nachmelkvorgang viertelindividuell eingeleitet wird.

19. Verfahren nach Anspruch 16, 17 oder 18, bei dem der Nachmelkvorgang tierindividuell eingeleitet wird.

20. Vorrichtung zum automatischen Melken eines Tieres, insbesondere einer Kuh, mit
wenigstens einem Melkstand (1)
einer Reinigungseinrichtung (18),
einem Melkzeug mit Melkbechern (17),
einer Ansetzeinrichtung (20), durch die die Melkbecher (17) an die Zitzen (16) des Tieres angebracht werden und mit einer Steuereinrichtung,
**dadurch gekennzeichnet, dass** durch die Steuereinrichtung die Ansetzeinrichtung (20) und die Reinigungseinrichtung (18) so angesteuert werden, dass die Melkbecher (17) an die Zitzen (16) des Tieres angesetzt werden und ein Vorgemelk ermolken wird, danach die Melkbecher (17) abgenommen werden und die Reinigungseinrichtung (18) für eine vorbestimmte Dauer aktiviert wird und dann die Melkbecher (17) erneut angesetzt werden und der Melkvorgang fortgesetzt wird.

21. Vorrichtung nach Anspruch 20, **dadurch gekennzeichnet, dass** eine Analyseeinrichtung vorgesehen ist, durch die die ersten ermolkenen Milchstrahlen eines Vorgemelks analysiert werden und in Abhängigkeit vom Ergebnis der Analyse die Milch entweder in eine Leitung für verwertbare Milch oder in eine Leitung für nicht-verwertbare Milch geleitet wird.

22. Vorrichtung nach Anspruch 20 oder 21, **dadurch gekennzeichnet, dass** eine Melkzeug-Reinigungseinheit vorgesehen ist, die mit der Steuereinheit verbunden ist, wobei das Melkzeug vor einem erneuten Ansetzen der Melkbecher (17) wenigstens einem Reinigungsvorgang unterzogen wird.

23. Vorrichtung nach Anspruch 20, 21, oder 22, **dadurch gekennzeichnet, dass** die Ansetzeinrichtung (20) für einen jeden Melkbecher (17) eine Ansetzeinheit (22) aufweist, wobei eine jede Ansetzeinheit (22) auch während des Melkvorgangs mit dem Melkbecher (17) verbunden bleibt.

24. Vorrichtung nach Anspruch 23, **dadurch gekennzeichnet, dass** jede Ansetzeinheit (22) schwimmend gelagert ist.

25. Vorrichtung nach Anspruch 23, **dadurch gekennzeichnet, dass** die Ansetzeinrichtung (20) schwimmend gelagert ist.

26. Vorrichtung nach einem der Ansprüche 20 bis 25, **dadurch gekennzeichnet, dass** die Ansetzeinrichtung (20) und/oder die Ansetzeinheit (22) während eines Nachmelkvorgangs auf die oder den Melkbecher (17) eine im wesentlichen vertikal nach unten gerichtete Kraft ausübt.

27. Vorrichtung nach einem der Ansprüche 23 bis 26 **gekennzeichnet durch** eine Ansetzeinheit (22) einen teleskopartig ausgebildeten Tragarm aufweist, der an einem freien Ende einen Melkbecher (17) trägt.

28. Vorrichtung nach einem der Ansprüche 20 bis 27, **dadurch gekennzeichnet, dass** die Ansetzeinrichtung (20) im wesentlich in Längsrichtung des Melkstands (1) beweglich ist.

29. Vorrichtung nach einem der Ansprüche 20 bis 28, **dadurch gekennzeichnet, dass** wenigstens die Ansetzeinrichtung (20) in einem Gehäuse (6) angeordnet ist, das teilweise einen Bodenabschnitt (5) des Melkstands (1) bildet.

30. Vorrichtung nach Anspruch 29, **dadurch gekennzeichnet, dass** das Gehäuse (6) eine Trittstufe bildet.

31. Vorrichtung nach Anspruch 29 oder 30, **dadurch gekennzeichnet, dass** das Gehäuse (6) in einer im wesentlichen vertikalen Richtung bewegbar ist.

32. Vorrichtung nach Anspruch 29, 30 oder 31, **dadurch gekennzeichnet, dass** eine Reinigseinrichtung (21) zur Reinigung des Innenenraums des Gehäuses (6) vorgesehen ist.

33. Vorrichtung nach einem der Ansprüche 20 bis 32, **dadurch gekennzeichnet, dass** diese eine Mehrzahl von Melkständen (1) aufweist, die nebeneinander angeordnet sind.

34. Vorrichtung nach Anspruch 33, **dadurch gekennzeichnet, dass** die Melkstände (1) im wesentlichen parallel zueinander angeordnet sind.

35. Vorrichtung nach Anspruch 31, **dadurch gekennzeichnet, dass** die Melkstände (1) im wesentlichen sternförmig angeordnet sind.

36. Vorrichtung nach Anspruch 33, 34 oder 35, **dadurch gekennzeichnet, dass** wenigstens zwei benachbarten Melkstände (1) eine gemeinsame sich in Längsrichtung der Melkstände (1) erstreckende Trennwand (25) aufweisen.

37. Vorrichtung nach Anspruch 36, **dadurch gekennzeichnet, dass** die Melkstände (1) paarweise angeordnet sind, wobei zwischen zwei benachbarten Melkstandpaaren (23, 24) wenigstens ein Zwischenraum (26) vorgesehen ist.

38. Vorrichtung nach einem der Ansprüche 33 bis 37, **dadurch gekennzeichnet, dass** ein Wartebereich (27) vorgesehen ist, in dem die Tiere warten, bevor sie einen Melkstand (1) betreten.
